# EUROPEAN PATENT APPLICATION

(11) **EP 0 725 223 A1**
(43) Date of publication of application: **07.08.1996**
(21) Application number: 96300684.6
(22) Date of filing: 31.01.1996
(51) Int. Cl.: F16B 41/00, B60R 9/058, G05G 5/00

(54) **Tightening knob**

(30) Priority: 31.01.1995 JP 32870/95
(71) Applicant: Car Mate Manufacturing Company Limited, Tokyo 162 (JP)
(72) Inventor: Kinouchi, Toyohisa, c/o Car Mate Manuf. Co., Ltd., Tokyo 162 (JP); Okutsu, Noriyuki, c/o Car Mate Manuf. Co., Ltd., Tokyo 162 (JP); Shimizu, Takamitsu, c/o Car Mate Manuf. Co., Ltd., Tokyo 162 (JP)
(74) Representative: Pacitti, Pierpaolo A.M.E.

(57) **Abstract**

The objective of this invention is to provide a tightening knob, in particular a secure tightening knob for fixing ski carriers.

A base (12) is inserted into a tightening knob section (11) so that it can axially slide and rotate to operate a tightening bolt (6). In a first sliding position, wherein the knob section (11) protrudes, the knob section (11) and the base (12) can be integrally rotated, whereas in a second sliding position, where the knob section (11) does not protrude, the knob section (11) and the base (12) can rotate substantially freely relative to each other. The tightening knob section may have a locking device to prevent unauthorised operation.

## Description

The present invention relates to a tightening knob and, in particular, to a tightening knob for fixing a roof carrier to the roof of an automobile.

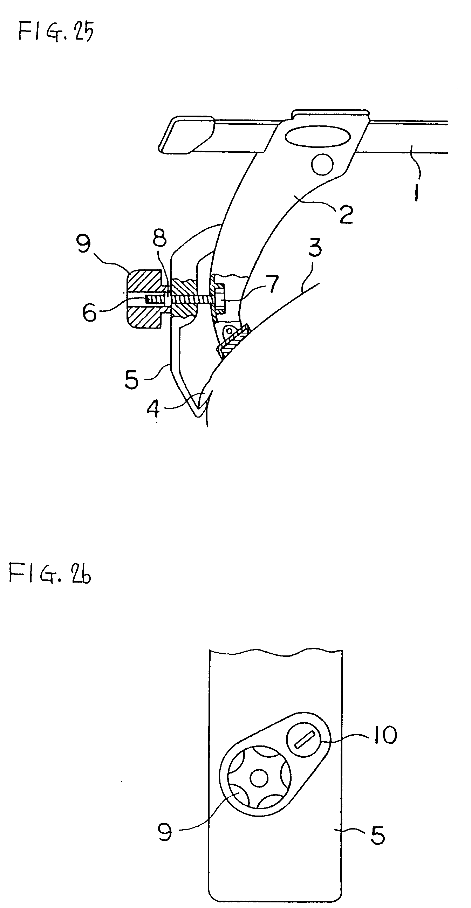

Figure 25 shows a conventional tightening knob. In this figure, reference numeral 1 is a carrier bar on which skis are loaded; 2 is a supporting leg; 3 is a body of, for example, a car; 4 is a rain gutter provided in the body 3; 5 is a tightening hook whose lower part is connected to the outer surface of the rain gutter 4; 6 is a tightening bolt penetrating from the inner surface of the supporting leg 2 through the tightening hook 5 and protruding from the hook 5; 7 is a locking member engaging the head 6' of the tightening bolt 6 on the inner side of the supporting leg 2; 8 is a nut section screwed into the other end of the tightening bolt 6; 9 is a tightening knob main body which has the nut section 8 formed at its base. In such a conventional tightening knob, the supporting leg 2 is fixed to the body by rotating the tightening knob main body 9 to screw the tightening bolt 6 into the nut section 8 to grasp the rain gutter 4 between the supporting leg 2 and the tightening hook 5.

Another conventional tightening knob is shown in, for example, Japanese Patent Laid Open No 58-86753 in which a locking device is provided in the tightening knob main body 9 to lock the rotation of the tightening knob main body to prevent ski carriers from being stolen.

Figure 26 shows such a tightening knob. In this figure reference numeral 10 is a key cylinder integrated with the tightening knob main body 9 and acting as a locking device.

Conventional tightening knobs, however, significantly protrude from an object on which the tightening knob main body 9 is mounted, creating a safety hazard.

In addition, in the case of tightening knobs that have a locking device, when the tightening knob main body 9 is rotated to establish the optimal tightening state, the key cylinder 10, which acts as the locking device, may be located in an eccentric portion of the tightening hook 5 or the key cylinder 10 may protrude laterally from the tightening hook 5, adversely affecting the appearance and safety of the device as shown in Figure 9. If the tightening knob main body 9 is further or inversely rotated from the appropriate tightening position so that the key cylinder 10 can be located on the centre line of the tightening hook 5 or so that it will not protrude laterally, an undesirable amount of tightening torque may be generated and thereby damage the tightening knob, or an insufficient amount of tightening torque may be generated.

The tightening knob according to this invention comprises a base for operating a tightening member and a knob section into which said base is fitted so as to slide in the axial direction, wherein the base and the knob section integrally engage each other when they have been slid apart and can move freely when they have been slid together.

The knob section may comprise a large-diameter hole section, a small-diameter hole section axially connected to the large-diameter hole section, and an engaging portion formed on the outer surface of the wall formed between the hole sections. The base may comprise a columnar section with an outer diameter corresponding to the small-diameter hole section of the knob section, a collar section formed at the outer end of the columnar section and having an outer diameter corresponding to the large-diameter hole section of the knob section, and another engaging portion formed on the inner surface of the collar section.

The knob section may have a locking device provided in an eccentric position of the hole and a locking plate fixed to a tightening member, wherein a hole into which a key member operated by the locking device is inserted and engaged and a hole into which the tightening member is inserted are formed.

The knob section may have a locking device provided in an eccentric position of the hole and a locking plate than can rotate around the tightening member, wherein a hole into which a key member operated by the locking device is inserted and engaged and a hole into which the tightening member is inserted are formed.

The knob section may have a mechanism to prevent it and the base from sliding axially and relatively when they are integrally engaged.

One of the engaged portions may have a recess shape while the other has a convex shape.

One of the engaged portions may be a ratchet ring while the other may be a ratchet claw or pawl.

In addition, in the tightening knob according to this invention, at least either the base or the knob section may be axially divided into two portions fitted into each other so that they are inserted.

In addition, the rotation of the knob section may be transmitted to the base via a ratchet mechanism.

Embodiments of the invention will now be described, by way of example, with reference to the accompanying drawings in which:
Figure 1 is a vertical cross-sectional side view of a tightening knob according to this invention when tightened.
Figure 2 is a vertical cross-sectional side view of the tightening knob shown in Figure 1 after tightening has been completed.
Figure 3 is a perspective view of the base of the tightening knob shown in Figure 1.
Figure 4 is a front view of the knob main body of the tightening knob shown in Figure 1.
Figure 5 is a vertical cross-sectional side view of a tightening knob according to another embodiment of this invention when tightened.
Figure 6 is a vertical cross-sectional side view of the tightening knob shown in Figure 5 after tightening has been completed.
Figure 7 is a vertical cross-sectional side view of the tightening knob in Figure 5 when locked.
Figure 8 is a vertical cross-sectional side view of a tightening knob according to another embodiment of this invention when locked.
Figure 9 is a vertical cross-sectional side view of a tightening knob according to another embodiment of this invention when locked.
Figure 10 is a left-side view of a knob section in the tightening knob according to another embodiment of this invention.
Figure 11 is a bottom view of the knob section in the tightening knob in Figure 10.
Figure 12 is a vertical cross-sectional side view of the integral part of a tightening knob according to another embodiment of this invention.
Figure 13 is a perspective view of a base of a tightening knob according to yet another embodiment of this invention.
Figure 14 is a vertical cross-sectional side view of a knob section of a tightening knob using the base shown in Figure 13.
Figure 15 is a right-end view of the knob section shown in Figure 14.
Figure 16 is a vertical cross-sectional side view of a tightening knob that has the base shown in Figure 14.
Figure 17 is a perspective view of the base of a tightening knob according to another embodiment of this invention.
Figure 18 is a right end view of the knob section of a tightening knob using the base shown in Figure 17.
Figure 19 is a vertical cross-sectional end view of the knob section shown in Figure 18.
Figure 20 is a vertical cross-sectional side view of a tightening knob using the base and the knob section, shown in Figures 17 and 18, when locked.
Figure 21 is a vertical cross-sectional end view describing the operation of the tightening knob shown in Figure 20.
Figure 22 is a vertical cross-sectional side view of a tightening knob, according to another embodiment of this invention, when locked.
Figure 23 is an end view of the tightening knob according to another embodiment of this invention.
Figure 24 is a vertical cross-sectional side view of the tightening knob shown in Figure 23.
Figure 25 is a vertical cross-sectional side view of the conventional tightening knob.
Figure 26 is a front view of a conventional tightening knob.

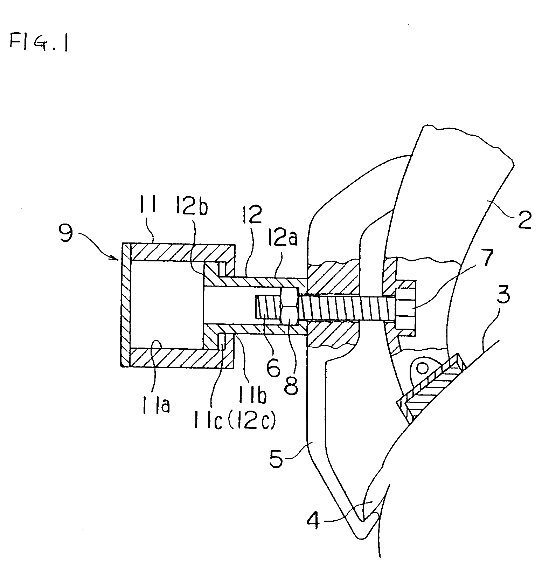

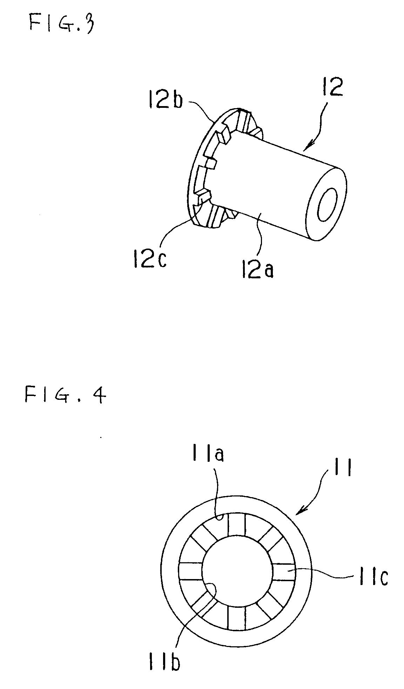

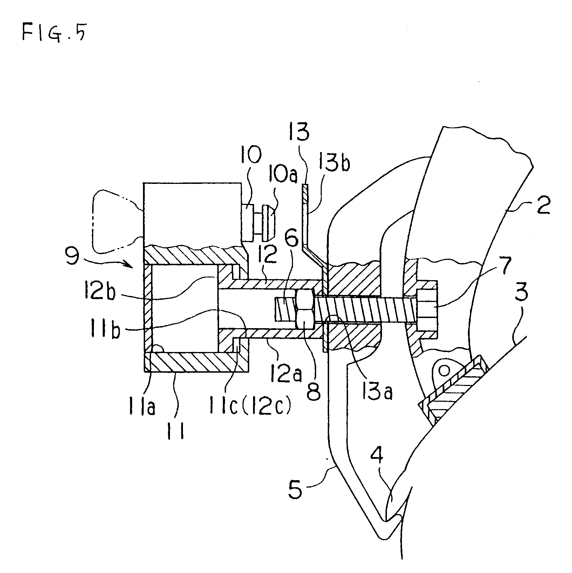

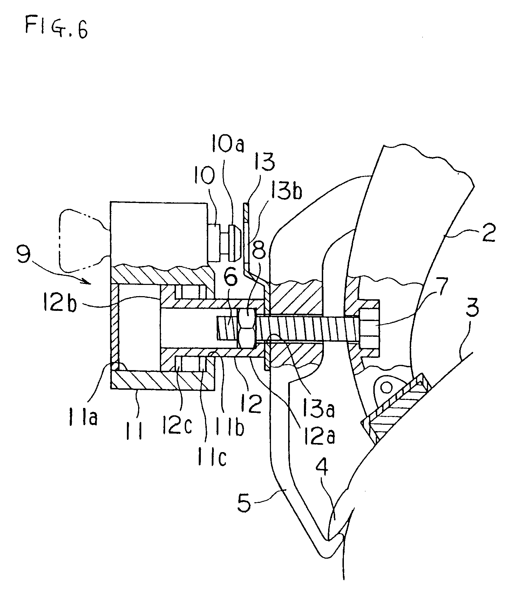

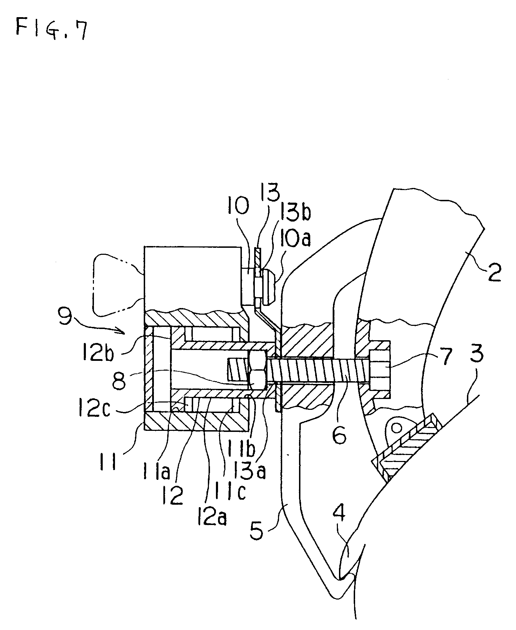

In an embodiment of a tightening knob according to this invention, a tightening knob main body 9 can be divided into a cylindrical knob section 11 and a base 12 acting as a nut section fitted into the knob section 11 so that it slides axially and into which a tightening bolt 6 is screwed, as shown in Figures 1 to 4.

The knob section 11 has a large-diameter hole section 11a, a small-diameter hole section 11b axially connected to the large-diameter hole section 11a, and various circumferentially spaced recesses 11c formed on the outer surface of a wall formed between the large-diameter and the small-diameter hole sections 11a and 11b.

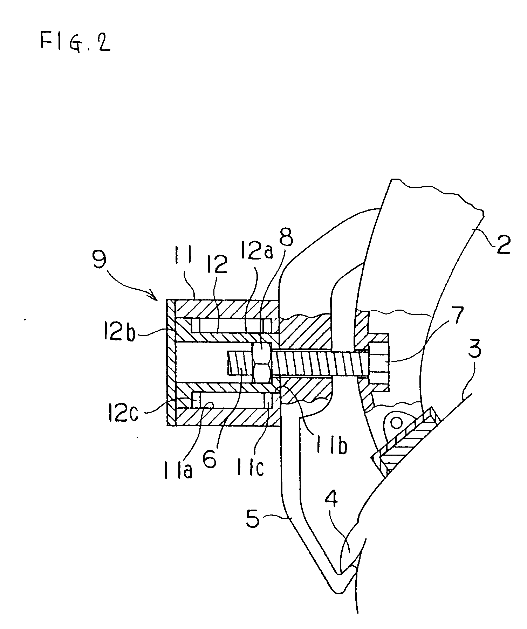

The base 12 has a columnar section 12a with an outer diameter corresponding to the small-diameter hole section 11b of the knob section 11, a circular collar section 12b formed at the outer end of the columnar section 12a, having an outer diameter corresponding to the large-diameter hole section 11a of the knob section 11, and convexes 12c formed on the inner surface of the circular collar section 12b, coinciding with the various recesses 11c formed on the outer surface of the wall of the knob section 11. In the first sliding position where the knob section 11 has been withdrawn from the base 12 as shown in Figure 1, the recesses 11c of the wall of the knob section 11 and the convexes 12c of the collar section 12b of the base 12 are fitted together, and the base 12 and the knob section 11 are integrally connected. In the second sliding position where the base 12 is fitted into the knob section 11 as shown in Figure 2, the recesses 11c and the convexes 12c are separated from each other, and the knob section 11 can be rotated independently of the base 12.

In the above configuration of the tightening knob according to this invention, when the knob section 11 slides into the first sliding position relative to the base 12 and is then rotated, the base 12 into which the tightening bolt 6 is screwed also rotates. Thus, the rain gutter 4 of the body 3 can be gripped between the supporting leg 2 and the tightening hook 5, and the supporting leg 2 can be fixed to the body 3. Once the optimal tightening state has been established, the rotation of the knob section 11 stops, and the knob section 11 slides to a second sliding position in the direction in which the base 12 is fitted into the knob section 11. That part of the knob section 11 which protrudes from the tightening hook 5 can then be shortened.

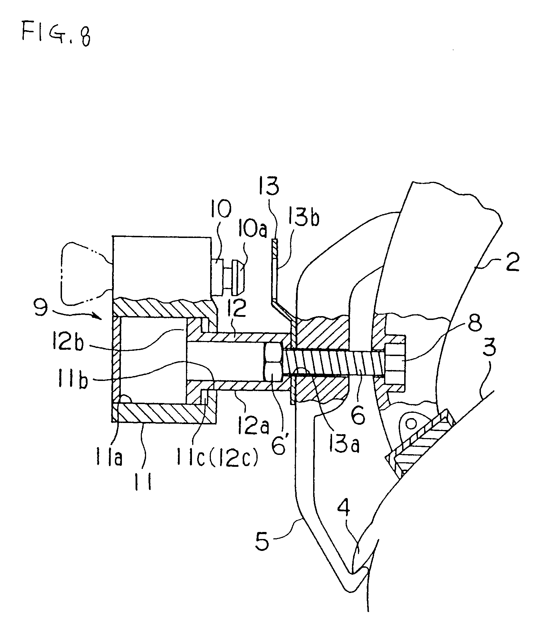

According to another embodiment of this invention, a key cylinder 10 acting as a locking device is provided in an eccentric position of the knob section 11, as shown in Figure 5 to 7, and a tightening hook 5 has fixed thereto a rectangular-shaped strip of locking plate 13 having a hole 13a into which the tightening bolt 6 is inserted and a rectangular engaging hole 13b into which a rectangular key 10a operated by the key cylinder 10 is inserted.

According to this embodiment, the knob section 11 slides to a first sliding position where the recesses 11c of the knob section 11 and the convexes 12c of the base 12 are fitted together, and is then rotated so that the rain gutter 4 of the car body 3 is gripped between the supporting leg 2 and the tightening hook 5, thereby fixing the supporting leg 2 to the car body 3. Once the optimal tightening state has been established, the knob section 11 slides to a second sliding position in which it can rotate freely relative to the base 12, as shown in Figure 6. In this position, the knob section 11 rotates until the key 10a of the key cylinder 10 is aligned with the engaging hole 13b of the locking plate 13. The knob section 11 further slides relative to the base 12 to a third sliding position where the key 10a is inserted into the hole 13b of the locking plate 13, as shown in Figure 7. The key 10a is rotated by a key operation so that it is locked to the hole 13b of the locking plate 13 and it cannot be removed therefrom.

As a result, since the knob section 11 cannot be pulled out axially from the base 12 to the first sliding position, it is impossible to rotate the base so as to remove ski carriers from the automobile. Therefore, the carriers cannot be stolen.

The tightening bolt 6 may be fixed to the base 12, and a nut may be used as the locking member 7.

Conversely, the recesses 11c may be located in the knob section 11, while the convexes 12c may be located on the base 12. The recesses 11c and the convexes 12c may also be other engaging means, for example, ratchets and claws.

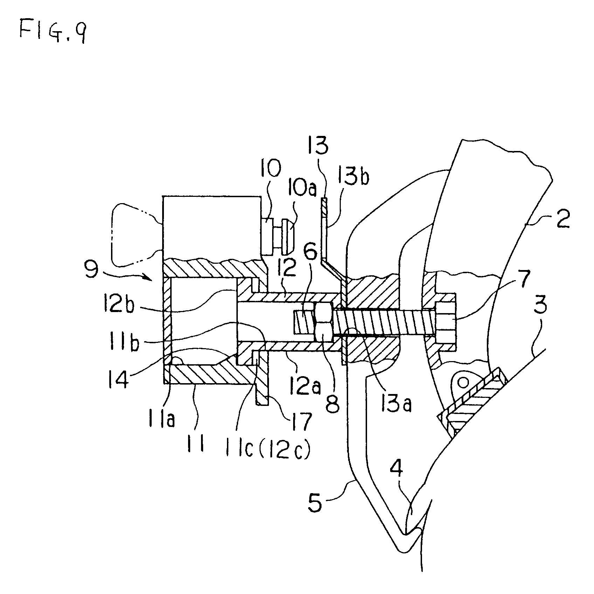

The head of the tightening bolt 6 in the above embodiment may be a nut 8, as shown in Figure 8, and a tightening bolt 6 with a head 6' may be screwed into this nut 8.

According to yet another embodiment of this invention, a claw 14 with a triangular cross section the vertical surface of which contacts the outer end surface of the base 12 is formed so that it protrudes inwardly from the large-diameter hole section 11a of the knob section 11 when the knob section 11 and the base 12 are engaged, as shown in Figures 9 to 11, so that in this state, the knob section 11 and the base 12 can be locked or released. Slits 15 extending axially on either side of the claw 14 are formed at the inner end of the knob section 11 where the claw 14 is formed, and a releasing lever 17 is formed at the rectangular-shaped portion 16 formed as a result of the formation of the slits, so that it protrudes from the outer circumference of the knob section 11.

According to this embodiment, the base 12 can be released by operating the releasing lever 17 to withdraw the claw 14 from the large-diameter hole section 11a of the knob section 11.

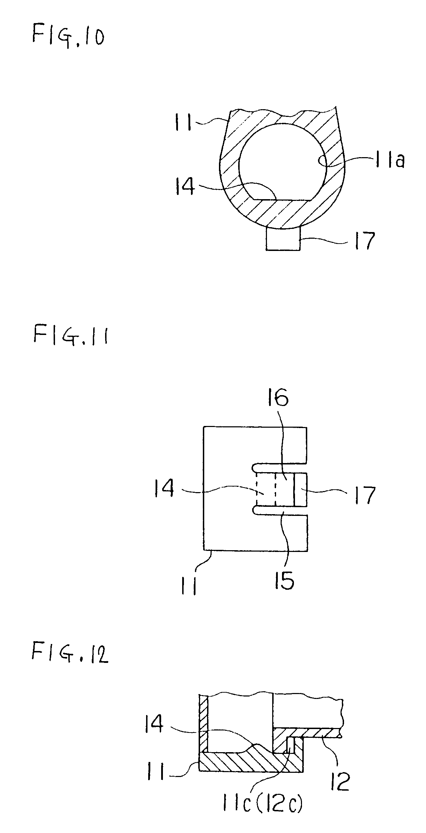

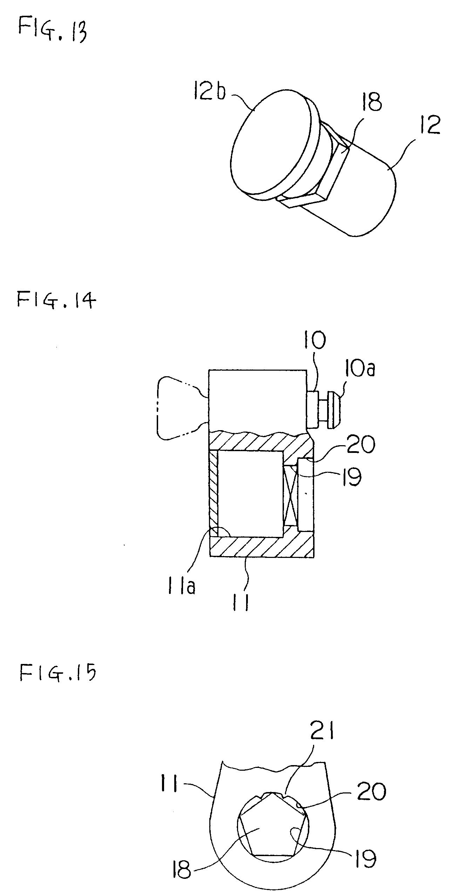

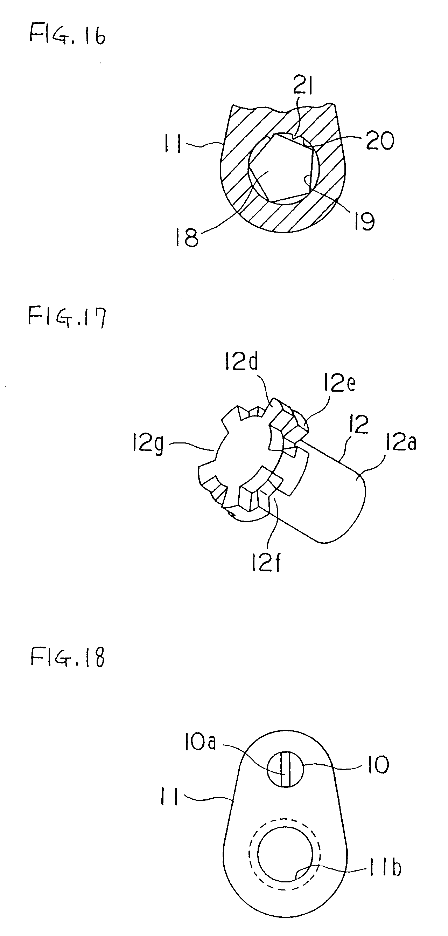

If in this embodiment, the claw 14 is formed so that its cross section is like a gently-sloping curve, as shown in Figure 12, releasing and locking between the knob section 11 and the base 12 can be achieved using the elastic deformation of the rectangular-shaped portion 16 without providing a releasing lever 17.

According to yet another embodiment of this invention, a nut member 18 with a polygonal, for example, a pentagonal cross section, the circumscribed circle of which has a smaller diameter than the circular collar section 12b, is provided axially at a certain distance, for example, 5 mm from the inner surface of the circular collar section 12b without providing convexes 12c on the circular collar section 12b of the base 12, as shown in Figure 13.

A pentagonal hole 19 shaped so that it corresponds to the nut member 18 and having a width equal to the above distance, for example, 5 mm, and a lock hole 20, located adjacent to the inner surface of the pentagonal hole 19 and having a diameter longer than or equal to that of the circumscribed circle of the nut member 18, are formed on the inner circumference of the knob section 11, as shown in Figure 14. A locking wall 21 protruding inwardly is formed on the inner circumferential surface of the locking hole 20 in positions circumferentially spaced at a short travelling distance, for example, 2 mm from a position corresponding to at least one vertex of the pentagonal hole 19 on both sides of this position.

According to this embodiment, when the knob section 11 slides outwardly relative to the base 12, so that the nut member 18 of the base 12 passes through the pentagonal hole 19 of the knob section 11 and is positioned inside the locking hole 20 shown in Figure 14, the inner surface of the circular collar section 12b of the base 12 contacts the outer surface of the pentagonal hole 19 of the knob section 11, thereby preventing the knob section 11 from being outwardly withdrawn further relative to the base.

In this state, the knob section 11 is rotated. Once the knob section 11 has been rotated by an amount corresponding to the above travelling distance of 2 mm, the locking wall 21 contacts the top surface of the nut member 18 of the base 12, thereby enabling integral rotation, tightening, and loosening between the knob section 11 and the base 12 as shown in Figure 16.

In this case, a tightening force as well as a force effected in the direction in which the knob section 11 is pushed inwardly relative to the base 12 are generally applied to the knob section 11.

In this embodiment, however, the nut member 18 of the base 12 is circumferentially rotated and displaced at the above travelling distance from the pentagonal hole 19 of the knob section 11, so that the outer surface of the nut member 18 contacts the inner surface of the pentagonal hole 19, thereby preventing the relative axial movement of the knob section 11 and the base 12 even when the above force is applied. Disengagement of these parts can thus be prevented.

The locking wall 21 may protrude like a pin.

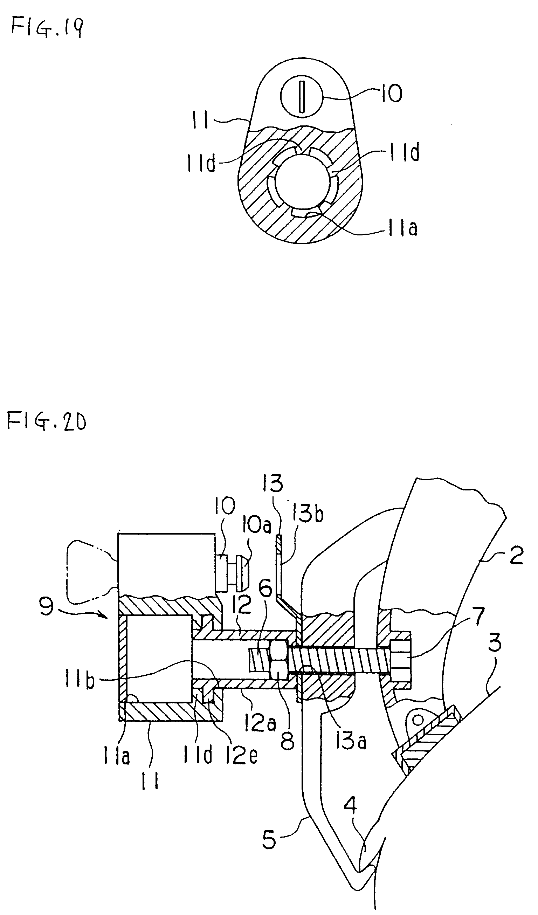

According to yet another embodiment of this invention, the base 12 comprises a columnar portion 12a with an outer diameter corresponding to the small-diameter hole section 11b of the knob section 11: various (for example, five) first protrusions 12d protruding outwardly from the respective positions spaced circumferentially on the outer circumference of the outer end of the columnar portion 12a and having an outer diameter corresponding to the large-diameter hole section 11a of the knob section 11 as well as a specified circumferential length and a specified axial width; and similar second protrusions 12e located adjacent to the inner surface of the respective first protrusions in such a way that the centers of the first and second protrusions are aligned and having a specified circumferential length and width larger than the circumferential length of the first protrusions 12d, as shown in Figure 17.

The knob section 11 does not have any recess 11c in its small-diameter hole section 11b, but rather has third protrusions 11d protruding inwardly from the large-diameter hole section 11a of the knob section 11 in a position axially moved from the outer surface of the small-diameter hole section 11b at a sliding distance corresponding to the width of the second protrusion 12e of the base 12, the protrusions 11d being shaped so as to correspond to grooves 12f formed in the second protrusions 12e of the base 12, as shown in Figures 18 and 19.

According to this embodiment, when the knob section 11 slides outwardly relative to the base 12, so that the third protrusions 11d of the knob section 11 pass through the grooves 12f formed between the second protrusions 12e of the base 12, and so that the inner surface of the second protrusion 12e of the base 12 contacts the outer surface of the small-diameter hole section 11b of the knob section 11, as shown in Figure 20, the knob section 11 can be no longer withdrawn outwardly relative to the base 12.

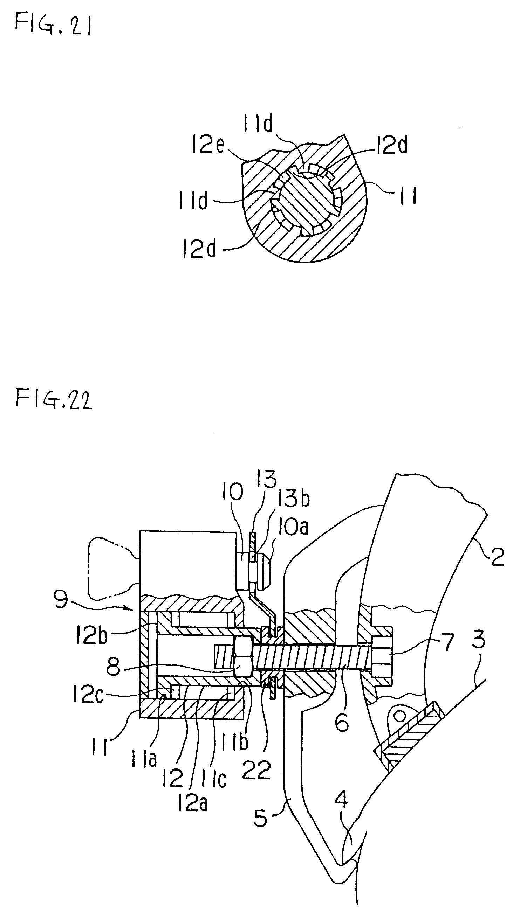

In this state, the knob section 11 is rotated. Once the knob section 11 has been rotated a distance corresponding to the difference between the circumferential lengths of the first and the second protrusions 12d and 12e of the base 12, the side of the third protrusion 11d of the knob section 11 contacts the side of the first protrusion 12d of the base 12, as shown in Figure 21, thereby enabling integral rotation, tightening, and loosening between the knob section 11 and the base,

In this case, a tightening force as well as a force effected in the direction in which the knob section 11 is pushed inwardly relative to the base 12 are generally applied to the knob section 11.

In this embodiment, however, since the third protrusions 11d of the knob section 11 are rotated and are biased from the grooves 12f formed among the second protrusions 12e of the base 12, the inner surface of the third protrusion 11d of the knob section 11 contacts the outer surface of the second protrusion 12e of the base 12, thereby preventing the relative axial movement of the knob section 11 and the base 12 even when the above force is applied. Disengagement of these parts can thus be prevented.

According to yet another embodiment of this invention, the locking plate 13 is not fixed to the tightening hook 5, but rather can be rotated between the tightening hook 5 and the tightening knob main body 9 using an idly running washer 22 for the tightening bolt 6, as shown in Figure 22.

According to this invention, the knob section 11 can be rotated even when the key 10a is engaged to the locking plate 13. In this state, however, the knob section 11 is not integrated with the base 12, and thus the two cannot be tightened or loosened.

In this invention, the knob section 11 and/or the base 12 can be axially divided into two parts so that the parts can be axially fitted together so as to be inserted or locked in a stretched or contracted position. The knob section 11 can thus be axially shifted in three or more phases relative to the base 12.

The base 12 and the knob section 11 may be engaged when axially close and move freely when separated.

The base 12 and the knob section 11 may also be configured so as they can move freely when further axially spaced apart from the position in which they become engaged after sliding in the direction in which they are axially spaced apart.

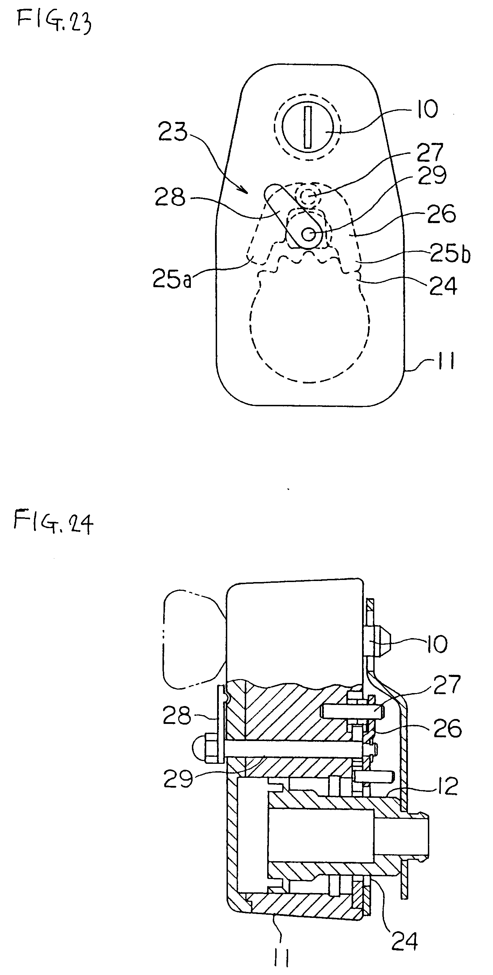

Figures 23 and 24 show yet another embodiment of this invention wherein the knob section 11 and the base 12 are connected together via a ratchet mechanism 23.

In Figures 23 and 24, reference numeral 24 depicts a ratchet gear fixed to the outer circumference of the base 12; 25a and b are ratchets each mating with the teeth of the ratchet gear 24 on their one or other side; 26 is a cam plate with the ratchets 25a and b formed at its respective ends; 27 is a pivotal pin that pivotally supports the middle of the cam plate 26 so that the middle part of the cam plate can rotate freely; and 28 is a lever that rotates the pivotal pin 27 via a toggle mechanism 29. In this embodiment, by laterally rotating the lever 28 against a conventionally known toggle spring (not shown), one of the ratchets 25a and 25b mates with the teeth of the ratchet gear 24, thereby transmitting only clockwise or counterclockwise rotary motion to the ratchet gear 24.

In this embodiment, rotating the knob section 11 causes the base 12 to be rotated by the ratchet mechanism 23 in either direction to thereby enable a tightening or loosening operation.

As described above, according to the tightening knob of this invention, when the knob section is rotated to carry out tightening, this operation can be per formed easily due to the outward protrusion of the knob section, while after tightening has been completed, high safety is ensured because the knob section can be pushed in to reduce the protruding height.

In addition, the tightening knob that has a locking device according to this invention is very advantageous in that the locking operation is easy because the knob section can be rotated to an arbitrary position after tightening has been completed.

## Claims

1. A tightening knob characterised in that the knob comprises a base for operating a tightening member and a knob section into which the base is fitted so as to slide in the axial direction, wherein the base and the knob section integrally engage each other when they have been slid apart and can move freely when they have been slid together.

2. A tightening knob according to Claim 1 characterised in that said knob section comprises a large-diameter hole section, a small-diameter hole section axially connected to the large-diameter hole section and a first engaging portion which is formed on a surface of a wall formed between said hole sections, and in that:
said base comprises a columnar section with an outer diameter corresponding to the small-diameter hole section of said knob section, a collar section formed at the outer end of the columnar section and having an outer diameter corresponding to the large-diameter hole section of said knob section and a second engaging portion formed on a surface of the collar section.

3. A tightening knob according to either of Claims 1 or 2 characterised in that said knob section has a locking device provided in an eccentric position thereof and a locking plate fixed to a tightening member, wherein a hole into which a key operated by said locking device can be inserted and engaged, and a hole into which said tightening member is inserted, are formed.

4. A tightening knob according to either of Claims 1 or 2 characterised in that said knob section has a locking device provided in an eccentric position thereof and a locking plate that can rotate around said tightening member, wherein there are formed a hole into which a key operated by said locking device can be inserted and engaged, and a hole into which said tightening member is inserted.

5. A tightening knob according to any of Claims 1, 2, 3 or 4 characterised in that said knob section has a mechanism to prevent it and said base from axially and relatively sliding while they are integrally engaged.

6. A tightening knob according to any one of Claims 2, 3, 4 or 5 characterised in that one of said engaging portions has a recess shape while the other has a convex shape.

7. A tightening knob according to any one of Claims 2, 3, 4 or 5 characterised in that one of said engaging portions is a ratchet ring while the other is a ratchet claw or pawl.

8. A tightening knob according to any one of Claims 1 to 7 characterised in that at least one of said base or said knob section is axially divided into two portions fitted into each other so that they are inserted.

9. A tightening knob according to any of Claims 1 to 8 characterised in that the rotation of said knob section is transmitted to said base via a ratchet mechanism.
